# FASCICULE DE BREVET EUROPEEN

(11) **EP 3 535 834 B1**
(45) Date de publication et mention de la délivrance du brevet: **22.05.2024**
(21) Numéro de dépôt: 17804610.8
(22) Date de dépôt: 27.10.2017
(51) Int. Cl.: H02K 3/52

(54) **STATOR DE MACHINE ÉLECTRIQUE TOURNANTE MUNI D'UN INTERCONNECTEUR À CONFIGURATION AMELIORÉE**
STATOR EINER ELEKTRISCHEN DREHMASCHINE MIT EINER VERBINDUNG MIT VERBESSERTER KONFIGURATION
STATOR OF A ROTATING ELECTRICAL MACHINE PROVIDED WITH AN INTERCONNECTION HAVING IMPROVED CONFIGURATION

(30) Priorité: 03.11.2016 FR 1660610
(43) Date de publication de la demande: 11.09.2019
(73) Titulaire: Valeo Equipements Electriques Moteur, 94046 Créteil Cedex (FR)
(72) Inventeur: GERVAIS, Hugues, 94046 Créteil (FR); HANQUEZ, Michaël, 94046 Créteil (FR); LEROY, Virginie, 94046 Créteil (FR)
(74) Mandataire: Valeo Powertrain Systems
(86) Numéro de dépôt international: PCT/FR2017/052977
(87) Numéro de publication internationale: WO 2018/083404

(56) Documents cités:
- EP-A2- 1 168 570
- EP-A2- 2 590 303
- WO-A1-2015/163285
- WO-A2-2015/092192
- DE-A1-102009 045 551
- US-A- 5 828 147

## Description

La présente invention porte sur un stator de machine électrique tournante muni d'un interconnecteur à configuration améliorée. L'invention se rapporte au domaine des machines électriques telles que les moteurs, les alternateurs, ou les alterno-démarreurs.

On connaît des machines électriques comportant un stator et un rotor solidaire d'un arbre menant et/ou mené. A cet effet, un boîtier de la machine est configuré pour porter à rotation l'arbre par exemple par l'intermédiaire de roulements. Le rotor pourra comporter un corps réalisé en tôles feuilletées munies de logements à l'intérieur d'au moins une partie desquels sont positionnés des aimants permanents.

Le stator comporte un corps sous la forme d'un paquet de tôles doté de dents pour le montage de bobines appartenant au bobinage du stator. Le corps du stator comporte des encoches ouvertes vers l'intérieur délimitées chacune par deux dents consécutives. Dans le cas d'un bobinage de type concentrique, le stator comporte plusieurs bobines préformées montées chacune sur une dent du stator. Ces bobines sont réalisées à partir d'un fil conducteur isolé enroulé autour de la dent sur plusieurs tours.

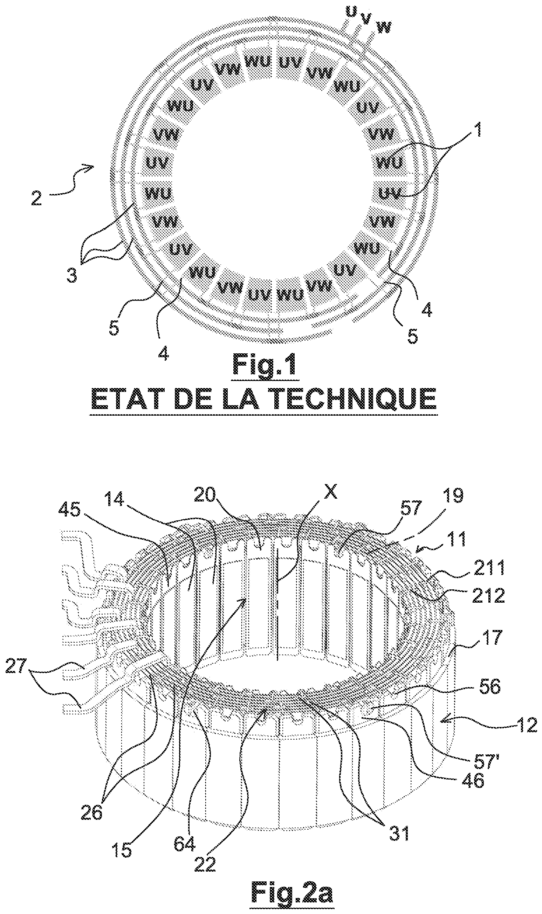

Comme cela est illustré par la figure 1, les bobines 1 sont interconnectées entre elles à l'aide d'un interconnecteur 2 pour former les phases U, V, W de la machine qui pourra être du type polyphasée. A cet effet, l'interconnecteur 2 comporte des traces conductrices annulaires 3 suivant un ou plusieurs niveaux radiaux pour l'interconnexion avec les bobines 1. Un tel interconnecteur est par exemple décrit dans les documents DE 10 2009 045551 A1 WO 2015/092192 A2, EP 1 168570 A2, WO 2015/163285 A1 et US 5 828 147 A. Toutefois, le problème d'une telle configuration est que, du fait du positionnement des entrées 4 et des sorties 5 des bobines, la longueur globale de bobinage d'une phase à une autre n'est pas la même, ce qui peut entraîner des déséquilibres de résistance entre les phases de la machine électrique.

Le document EP 2 590 303 A2 introduit un autre exemple d'interconnecteur pour un stator triphasé. Cet interconnecteur présente quatre traces conductrices annulaires, dont trois traces correspondent aux trois phases et une trace correspond au neutre. Les trois traces associées aux phases sont empilées axialement, et la trace correspondant au neutre vient se positionner radialement par rapport auxdites trois traces. Les entrées des bobines sont positionnées à différentes positions axiales selon la phase correspondante, tandis que les sorties de bobines sont positionnées de façon similaire par rapport à la trace correspondant au neutre. Ainsi, une telle configuration induit que la longueur globale de bobinage d'une phase à une autre n'est pas la même, ce qui peut entraîner des déséquilibres de résistance entre les phases de la machine électrique.

L'invention vise à remédier efficacement à cet inconvénient en proposant un stator de machine électrique tournante notamment pour véhicule automobile, ledit stator comportant:
- un corps de stator comportant un axe et une pluralité de dents réparties angulairement autour dudit axe, ledit corps de stator formant une périphérie externe et une périphérie interne autour dudit axe,
- des bobines montées chacune autour d'une dent par l'intermédiaire d'un isolant de bobine, chacune des bobines
   étant formée par au moins un fil enroulé autour de ladite dent correspondante,
- chaque fil de bobine comprenant une entrée et une sortie correspondant chacune à une extrémité dudit fil,
- un interconnecteur comprenant un ensemble de traces, lesdites traces étant annulaires et étant connectées électriquement aux entrées et sorties des bobines, et un support de traces comportant des parois isolantes positionnées chacune entre deux traces successives, ledit interconnecteur étant monté entre la périphérie interne et la périphérie externe dudit corps de stator, chaque bobine a une extrémité positionnée du côté de ladite périphérie interne et l'autre extrémité positionnée du côté de ladite périphérie externe dudit stator, et l'ensemble des traces est positionné radialement les unes à côté des autres et entre les entrées et les sorties desdites bobines, l'isolant de bobine comprend sur chacun de ses rebords une portion d'encliquetage apte à s'encliqueter avec une portion d'encliquetage complémentaire appartenant au support des traces, les fils de bobine sont pliés de telle façon que les entrées et les sorties s'étendant radialement et au-dessus des traces dudit interconnecteur.

Ainsi, en positionnant les entrées et les sorties de bobines de part et d'autre du connecteur, l'invention permet de compenser les longueurs de fils entre chacune des phases de manière à standardiser la réalisation des bobines. On garantit ainsi une résistance homogène entre les phases de la machine électrique.

Selon une réalisation, l'ensemble desdites bobines comprend une même longueur de fil de sortie.

Selon une réalisation, l'ensemble desdites bobines comprend une même longueur de fil d'entrée.

Selon une réalisation, chacune des traces comprend des bossages s'étendant axialement en saillie et des portions de connexion entre ces bossages, chacune des entrées et des sorties étant soudée sur un des bossages correspondant.

Selon une réalisation, lesdites parois isolantes ont une hauteur comprise entre une hauteur des portions de connexion et une hauteur des bossages. On garantit ainsi une isolation électrique entre les zones de connexion et les traces situées à proximité de ces zones.

Selon une réalisation, les entrées et les sorties sont pliées suivant deux sens opposés de manière à se rapprocher l'une par rapport à l'autre.

Selon une réalisation, une longueur des entrées ou des sorties s'étend jusqu'à la trace ou une des deux traces au centre dudit interconnecteur. Selon une réalisation, chaque bobine comprend une entrée et une sortie de même longueur.

L'invention a également pour objet une machine électrique tournante caractérisée en ce qu'elle comporte un stator tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une représentation schématique d'un stator bobiné muni d'un interconnecteur selon l'état de la technique;
La figure 2a est une vue en perspective d'un stator bobiné muni d'un interconnecteur selon la présente invention ;
La figure 2b est une vue schématique de dessus illustrant les connexions entre les bobines et les traces de l'interconnecteur selon un aspect d'un mode de réalisation de l' invention ;

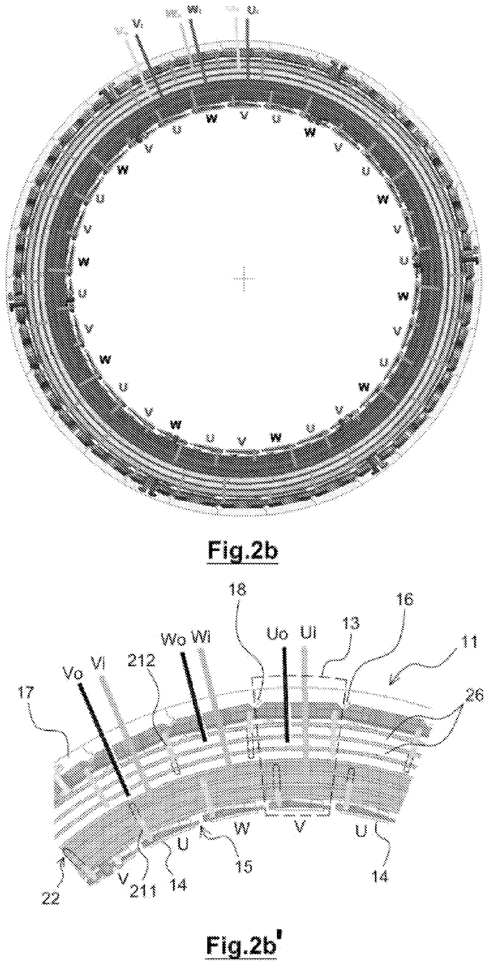

La figure 2b' est une vue schématique partielle de dessus illustrant les connexions entre les bobines et les traces de l'interconnecteur selon le premier aspect de l'invention de la figure 2b et selon un autre aspect de l'invention ;

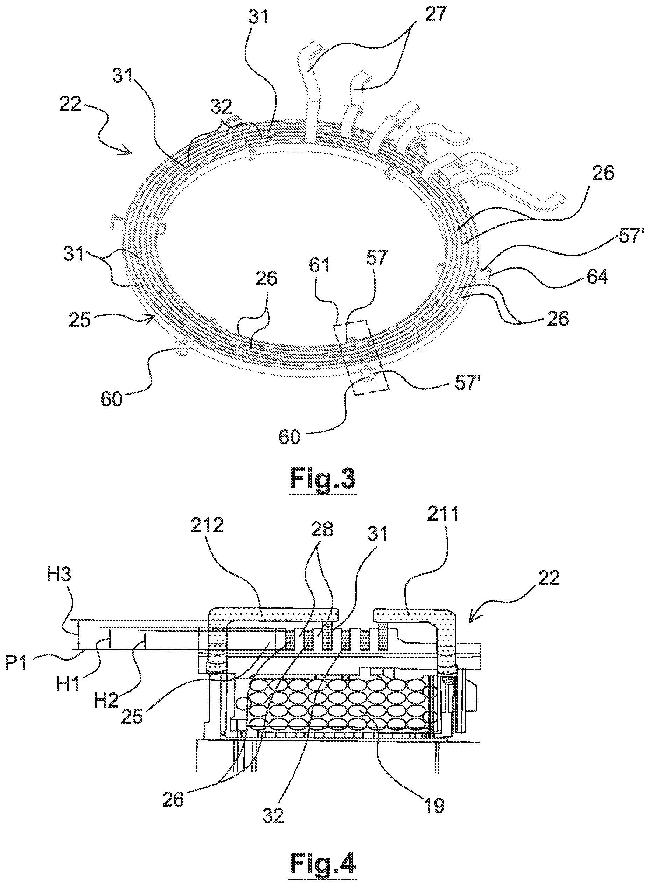

La figure 3 représente une vue en perspective de l'interconnecteur selon la présente invention;
La figure 4 est une vue en coupe transversale de l'interconnecteur selon la présente invention;

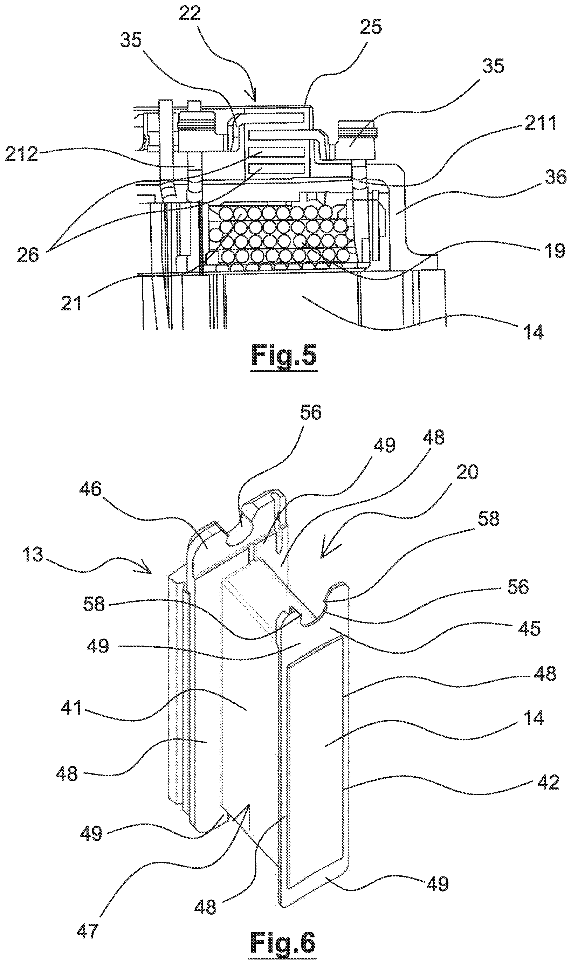

La figure 5 est une vue en coupe transversale illustrant une variante qui ne fait part de l'invention
de l'interconnecteur selon la présente invention;
La figure 6 est une vue en perspective illustrant le montage d'un isolant de bobine sur une dent d'une portion de stator selon l'invention;

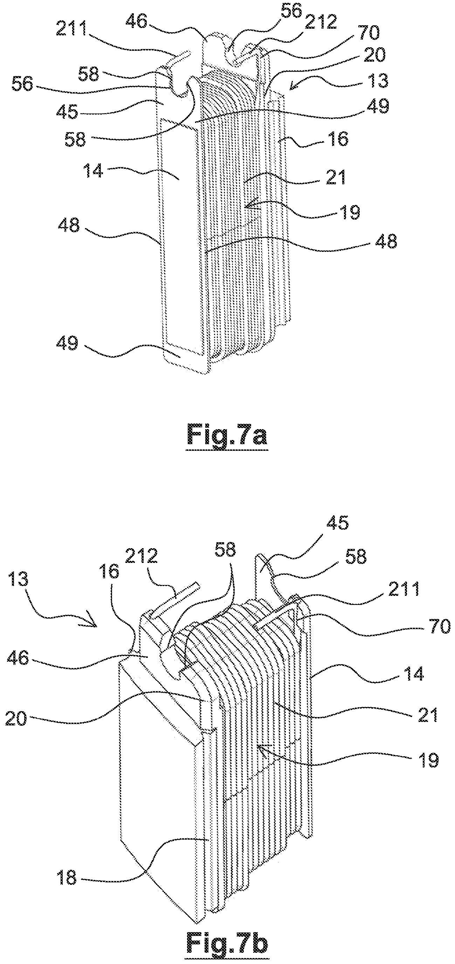

Les figures 7a et 7b sont des vues en perspective illustrant le montage d'une bobine autour de l'isolant de la figure 6;

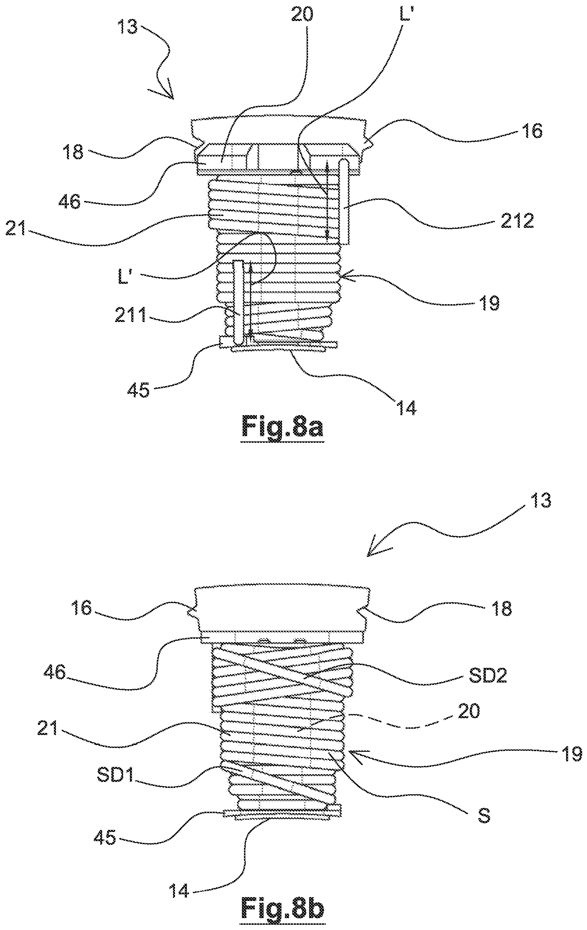

Les figures 8a et 8b sont respectivement des vues de dessus et de dessous de l'ensemble bobiné des figures 7a et 7b;

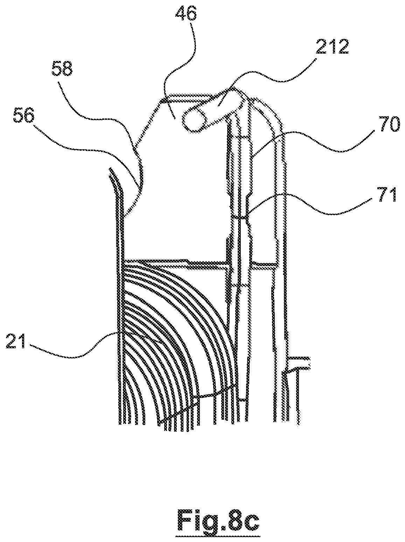

La figure 8c est une vue détaillée du guide-fil ménagé dans l'isolant de bobine (pour les fils d'entrée ou de sortie bobine) ;

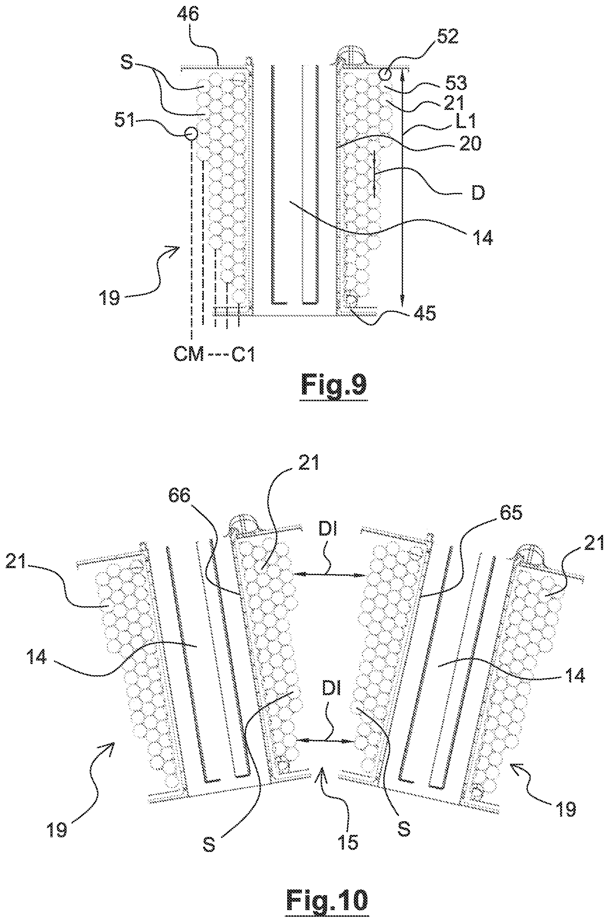

La figure 9 est une vue en coupe longitudinale de l'ensemble bobiné des figures 7a et 7b;
La figure 10 est une vue en coupe illustrant la distance d'isolation électrique entre deux bobines successives montées dans une encoche à bords non-parallèles;

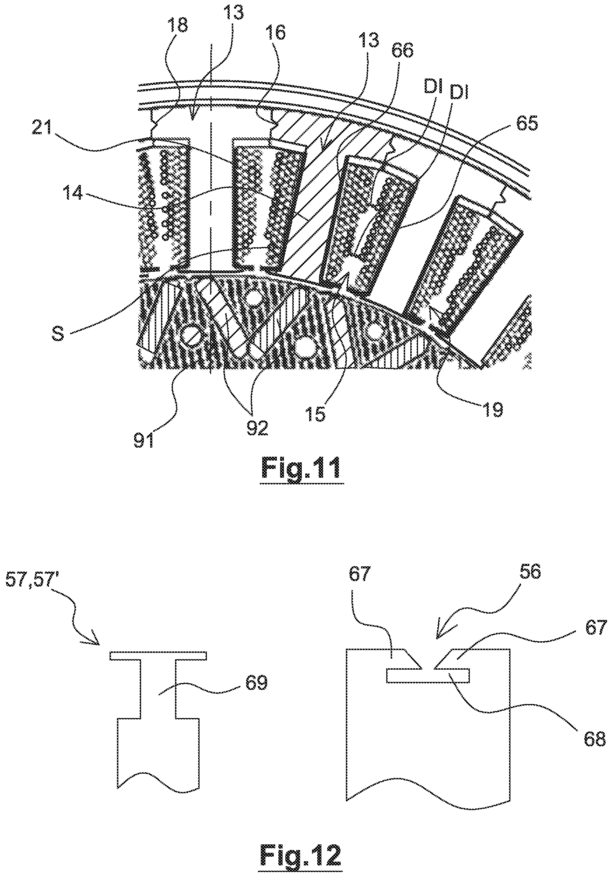

La figure 11 est une vue en coupe partielle du stator et du rotor illustrant la distance d'isolation électrique entre les bobines ainsi qu'une implantation en V des aimants du rotor;
La figure 12 est une représentation schématique d'une variante de réalisation du système d'encliquetage entre l'interconnecteur et les isolants de bobine.

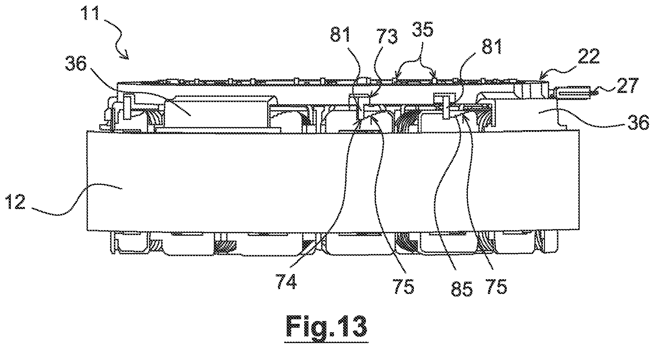

La figure 13 est une vue de côté du stator illustrant une variante de réalisation ne faisant pas part de l'invention du système d'encliquetage de l'interconnecteur sur les isolants de bobine;

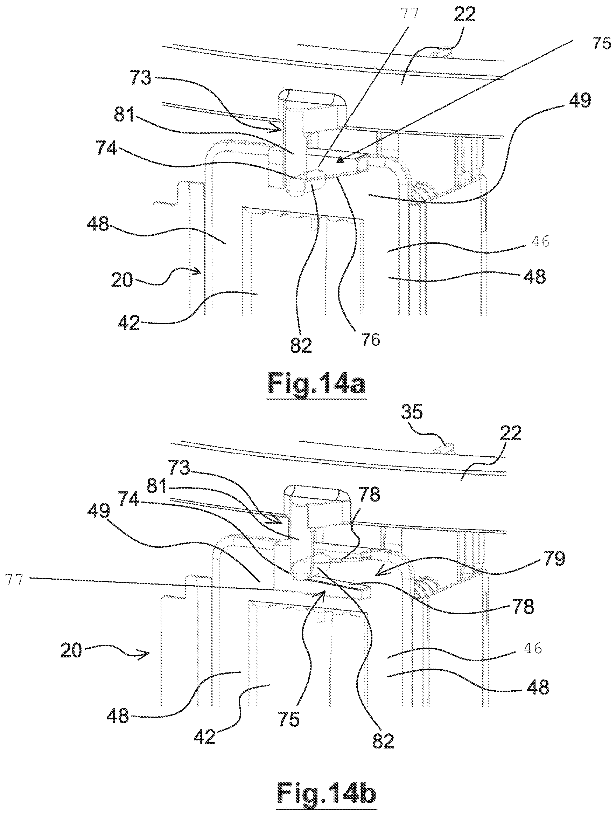

La figure 14a est une vue illustrant un zoom partiel de la figure 13, montrant le système d'encliquetage de l'interconnecteur.
La figure 14b est une variante modes de réalisation ne faisant pas part de l'invention du système d'encliquetage de l'interconnecteur et du système de guidage correspondant

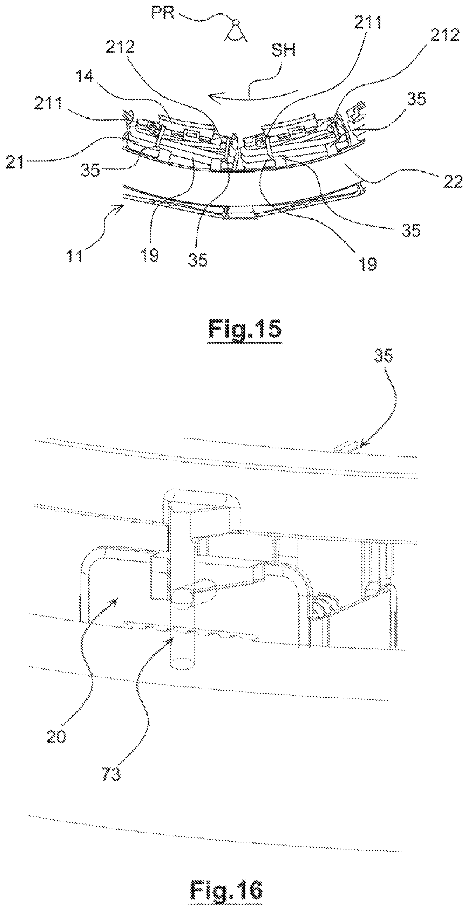

La figure 15 est une vue de dessus partielle du stator comprenant un interconnecteur non revendiqué illustrant le plaquage des pattes de l'interconnecteur contre les extrémités des fils de bobine;
La figure 16 est une variante non revendiquée de la figure 14a, il s'agit aussi d'une vue en perspective d'une variante non revendiqué du système d'encliquetage de l'interconnecteur et du système de guidage correspondant.

Les éléments identiques, similaires ou analogues conservent la même référence d'une figure à l'autre.

Les figures 2a et 2b montrent un stator 11 d'axe X ayant un corps 12 comportant des dents 14 réparties angulairement de manière régulière autour de l'axe X. Le corps 12 présente une périphérie annulaire externe et une périphérie annulaire interne autour de l'axe X.

Le corps 12 comporte des encoches 15 ouvertes vers l'intérieur, deux encoches 15 consécutives étant séparées par une dent 14. Une bande de matière, correspondant à la culasse 17 s'étend entre le fond des encoches 15 et la périphérie externe du corps 12. Le corps 12 est formé par un empilement de tôles réalisées en matière ferromagnétique s'étendant dans un plan radial perpendiculaire à l'axe X. Le stator 11 pourra être formé à partir de portions élémentaires 13 bien visibles sur les figures 7a et 7b comportant chacune une dent 14 et une portion angulaire de la culasse 17. Les portions élémentaires 13 sont assemblées à l'aide de moyens complémentaires de liaison 16, 18 ménagés dans les bords de la portion de culasse. En l'occurrence, l'élément 16 est un élément mâle destiné à venir s'engager dans l'élément femelle 18 de forme complémentaire.

Le stator 11 appartient à une machine polyphasée comportant un bobinage de stator doté de plusieurs bobines 19, ici préformées. Les bobines 19 sont interconnectées entre elles à l'aide d'un interconnecteur 22 compact comportant plusieurs traces conductrices 26, comme cela est décrit ci-après.

Plus précisément, comme on peut le voir sur les figures 7a, 7b, 8a, et 8b, les bobines 19 sont réalisées à partir d'un fil 21 enroulé sur plusieurs tours. Les fils 21 consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, chaque bobine 19 est enroulée autour de l'une des dents 14 par l'intermédiaire d'un isolant de bobine 20. Cet isolant 20 est un isolant électrique réalisé en matière électriquement isolante et moulable. En variante, les isolants de bobine 20 pourront être remplacés par du papier isolant.

Chaque fil de bobine 21 comprend une entrée 211 et une sortie 212 correspondant chacune à une extrémité du fil 21. Les entrées 211 et les sorties 212 de chaque bobine 19 dépassent axialement du bobinage d'un même côté du stator 11 correspondant sur la figure 2a au côté supérieur du stator 11.

Dans le cadre d'une application triphasée mettant en oeuvre un pont en H, les phases U, V, W de la machine sont commandées indépendamment les unes des autres. Dans le cas d'une machine à P bobines 19, on associe P/3 bobines à chaque phase. Par exemple, pour une machine à 24 bobines, chaque phase est associée à huit bobines 19. Les bobines 19 sont connectées de manière alternées aux trois phases U, V, et W.

Ainsi, comme on peut le voir sur la figure 2b, chaque bobine 19 comporte une entrée 211 destinée à être connectée avec les entrées des autres bobines 19 correspondantes à une des entrées de phase Ui, Vi, Wi de la machine et une sortie 212 destinée à être connectée avec les sorties des autres bobines 19 correspondantes à une des sorties de phase Uo, Vo, et Wo. Le branchement des bobines 19 aux phases est alterné.

A cet effet, comme cela est visible sur les figures 3 et 4, l'interconnecteur 22 comprend un support 25 et un ensemble de traces 26 montées sur le support 25. Le support 25 présente un diamètre interne sensiblement égal ou inférieur au diamètre interne du corps de stator 12 et un diamètre externe sensiblement égal ou inférieur au diamètre externe du corps de stator 12. L'interconnecteur 22 pourra ainsi être monté entre la périphérie interne et la périphérie externe du corps de stator 12. Les traces 26 sont électriquement conductrices en étant par exemple en cuivre ou avantageusement en un autre matériau métallique soudable.

En l'occurrence, les traces 26 sont annulaires et sont positionnées radialement les unes à côté des autres. Autrement dit, les traces annulaires 26 sont coaxiales et le diamètre des traces 26 est croissant lorsque l'on se déplace de l'intérieur vers l'extérieur de l'interconnecteur 22. Les traces 26 comportent chacune un terminal de connexion 27 avec l'entrée ou la sortie de phase correspondante. Dans le cas d'un pont en H, les bobines 19 connectées en étoile sont commandées indépendamment les unes des autres en sorte que l'on prévoit six traces, soit trois ensembles de deux traces correspondant chacun à une entrée Ui, Vi, Wi et une sortie Uo, Vo, et Wo de phase correspondante. Le support 25 comporte des parois isolantes 28 s'étendant chacune entre deux traces 26 successives afin d'éviter les court-circuits.

Chaque bobine 19 présente une extrémité 211 positionnée du côté de la périphérie interne du stator et l'autre extrémité 212 positionnée du côté de la périphérie externe du stator 11. L'ensemble des traces 26 est positionné radialement entre les entrées 211 et les sorties 212 des bobines 19, comme cela est illustré par les figures 2a, 2b, et 4.

Les fils de bobines 19 sont pliés de telle façon que les entrées 211 et les sorties 212 s'étendent radialement et au-dessus des traces 26 de l'interconnecteur 22. Les entrées 211 et les sorties 212 sont pliées suivant deux sens opposés de manière à se rapprocher l'une par rapport à l'autre. Ainsi, les extrémités des fils 21 situées du côté extérieur du stator 11 sont pliées vers l'intérieur du stator 11; tandis que les extrémités des fils 21 situées du côté intérieur du stator 11 sont pliées vers l'extérieur du stator 11.

Afin de faciliter la soudure des entrées 211 et des sorties 212 ainsi orientées, chacune des traces 26 comprend des bossages 31, visibles sur les figures 3 et 4 notamment, s'étendant axialement et des portions de connexion 32 entre ces bossages 31. Chacune des entrées 211 et des sorties 212 pourra ainsi être soudée sur un des bossages 31 correspondant.

Comme cela est montré sur la figure 4, les parois 28 du support 25 ont une hauteur H1 comprise entre la hauteur H2 des portions de connexion 32 et la hauteur H3 des bossages 31. Chacune des hauteurs H1, H2, H3 est mesurée axialement à partir d'un même plan P1 perpendiculaire à l'axe X situé dans le prolongement de la face d'une portion de connexion 32 le plus proche des bobines 19. On garantit ainsi une isolation électrique entre les zones de connexion sur l'interconnecteur 22 et les traces situées à proximité de ces zones.

Selon un aspect de l'invention, l'ensemble des bobines comprennent la même longueur de fils de bobinage. Cela permet d'avoir des phases de même résistance et donc une machine électrique ayant sa résistance uniformément répartie.

### Selon un premier aspect de l'invention :

- 1/N bobines ont la même longueur d'entrée et la même longueur de sortie, et en ce que les longueurs d'entrée sont plus petites que les longueurs de sortie
   -- 1/N bobines ont la même longueur d'entrée et la même longueur de sortie, et en ce que les longueurs de sortie sont plus petites que les longueurs d'entrée
   -- 1/N bobines ont la même longueur d'entrée et la même longueur de sortie, et en ce que les longueurs d'entrée sont égales aux longueurs de sortie
N étant égal à trois dans le cas d'une machine triphasé.

On peut voir sur la figure 2b, une machine triphasé et donc N = trois, et en ce que les phases U représentent 1 /3 des bobines, V un autre tiers des bobines et W le dernier tiers des bobines.

Selon un exemple particulier de cet aspect de l'invention, les bobines de la phase U comprennent tous la même longueur d'entrée et la même longueur de sortie, et en ce que les longueurs d'entrées sont égales aux longueurs de sortie. En effet dans cet exemple les entrées des bobines de la phase U sont raccordées à la deuxième trace des entrées (traces internes dans cet exemple) et les sorties des bobines à la deuxième trace des sorties (traces externes dans cet exemple). Bien entendu, cela aurait pu être la phase V ou W.

Dans cet exemple particulier, les bobines de la phase V comprennent tous la même longueur d'entrée et la même longueur de sortie, et en ce que les longueurs d'entrées sont plus petite que les longueurs de sortie. En effet dans cet exemple les entrées des bobines de la phase V sont raccordées à la première trace des entrées (traces internes dans cet exemple) et les sorties des bobines à la troisième trace des sorties (traces externes dans cet exemple). Bien entendu, cela aurait pu être la phase U ou W.

Enfin, dans cet exemple particulier, les bobines de la phase W comprennent tous la même longueur d'entrée et la même longueur de sortie, et en ce que les longueurs d'entrées sont plus grande que les longueurs de sortie. En effet dans cet exemple les entrées des bobines de la phase W sont raccordées à la troisième trace des entrées (traces internes dans cet exemple) et les sorties des bobines à la première trace des sorties (traces externes dans cet exemple). Bien entendu, cela aurait pu être la phase U ou V.

La figure 4 représente une coupe d'une bobine de la phase W. Cette coupe montre la zone de soudage des extrémités des bobines 19 (entrées et sortie) sur les pistes 26 de l'interconnecteur 22

Selon un deuxième exemple de l'aspect de l'invention représenté sur la figure 2b' par des pointillés allongeant les sorties et entrées de phase, l'ensemble des bobines 19 comprennent une même longueur de fil de sortie 212. L'ensemble des bobines 19 comprennent également de préférence une même longueur de fil d'entrée 211.

Selon une réalisation de ce deuxième exemple de l'aspect de l'invention, chaque bobine 19 comprend de préférence une entrée 211 et une sortie 212 de même longueur L' (cf. figure 8a). Par même longueur d'entrée 211 ou de sortie 212, on entend des longueurs de fil d'entrée ou de sortie qui sont égales à 1mm de différence entre les deux longueurs de fils. Ainsi, la longueur des entrées 211 ou des sorties 212 s'étend jusqu'à la trace 26 située au centre de l'interconnecteur 22 (dans le cas d'un nombre de traces 26 impair) ou une des deux traces 26 situées au centre de l'interconnecteur 22 (dans le cas d'un nombre 26 de traces pair). Cela permet d'assurer une réalisation standardisée des bobines 19 de la machine.

On précise ici que, dans cet exemple de la figure 2b', la partie sans pointillé représente le premier exemple et avec les pointillé le deuxième exemple. Dans le deuxième exemple" les entrées 211 et les sorties 212 ont leur zone de soudage des extrémités des bobines 19 sur les pistes 26 de l'interconnecteur 22 comme dans le premier exemple.

L'intérêt du premier exemple par rapport au deuxième intérêt, est d'éviter le risque que les fils (entrée ou sortie) soient trop prés les un des autres .

L'intérêt du deuxième exemple par rapport au premier exemple est que toute les bobines sont bobinées de la même manière et sont identiques.

Dans une variante qui ne fait pas part de l'invention et étant illustré par la figure 5, l'interconnecteur 22 comporte des traces 26 annulaires positionnées axialement les unes à côté des autres. Chacune des entrées 211 et des sorties 212 est reliée à une trace 26 de l'interconnecteur 22 par le biais d'une patte de connexion 35. Dans ce cas, les traces 26 ont des diamètres internes et externes sensiblement identiques. Ces traces 26 sont empilées axialement les unes sur les autres et isolées électriquement entre elles. Chaque trace 26 porte sur sa périphérie interne et externe des pattes 35 s'étendant en saillie pour le soudage des extrémités des bobines 19 du stator 11. De préférence, les traces 26 sont noyées dans le support 25 réalisé en matériau électriquement isolant, tel que de la matière plastique. L'interconnecteur 22 pourra comporter des pieds d'appui 36 destinés à reposer sur un rebord de la culasse du stator 11.

Par ailleurs, l'isolant de bobine 20 est réalisé en matière électriquement isolante par exemple en matière plastique telle que du PA 6.6, qui pourra être renforcé par des fibres, telles que des fibres de verre. Comme on peut le voir sur la figure 6, l'isolant de bobine 20 comporte un corps central 41 comprenant une ouverture traversante 42 pour son montage autour d'une dent 14 de stator. Le corps central 41 est destiné à être entouré par une bobine 19.

L'isolant de bobine 20 comporte également un rebord avant 45 et un rebord arrière 46 à chacune des extrémités du corps central 41 formant une gorge 47 autour du corps central 41 pour le maintien de la bobine 19. Le rebord avant 45 est situé du côté de l'extrémité libre de la dent 14 correspondante, tandis que le rebord arrière est situé du côté de la culasse 17.

Comme on peut le voir sur la figure 9, chaque bobine 19 comprend une pluralité de couches C1-CM de spires S superposées les unes sur les autres. Chaque couche de spires C1-CM comprend un ensemble de spires S coaxiales.

Comme cela est mieux visible sur la figure 8b, chaque bobine 19 comprend une première spire de décalage SD1 qui n'est pas située dans la dernière couche de spire CM et qui passe au-dessus d'au moins deux spires S d'une couche inférieure.

Ainsi une spire décalée est une première spire bobinée d'une couche dont son début de tour est plus éloignée d'un bord d'un isolant de bobine d'au moins une largeur axialement de la section du conducteur de la bobine que le début de tour de la première et dernière spire formant la première couche.

Le début de tour de la spire décalée est donc décalée axialement d'au moins plus d'une largeur de la dernière spire et de la première spire de la première couche.

En d'autre terme, le bord de l'isolant de bobine le plus proche de l'axe X du stator est plus éloigné de la spire décalée d'au moins une largeur de spire qu'au moins une spire de la couche précédente.

En outre, la bobine 19 comprend une deuxième spire de décalage SD2 formée par la dernière spire de la bobine 19.

La deuxième spire de décalage étant décalée sur une autre couche que celle formée au moins par la première spire décalée et en ce que la deuxième spire décalé est encore plus décalée que la première spire décalée du bord le plus proche de l'isolant de bobine le plus proche de l'axe X.

Cette dernière spire SD2 comprend une portion 51 formant au moins une portion d'une dernière couche CM et une autre portion 52 positionnée entre une portion de spire 53 de la couche précédente et le rebord 46 de l'isolant de bobine 20 (cf. figure 9). La deuxième spire étant décalée sur une autre couche que celle formée au moins par la première spire décalé et en ce qu'elle est décalée par rapport à un corps de l'isolant de bobine du même côté que la première spire décalée.

La portion 52 positionnée entre une portion de spire 53 de la couche précédente et le rebord 46 de l'isolant de bobine 20 est montée serrée entre ce rebord 46 et cette portion de spire 53 en déformant élastiquement le rebord 46.

L'utilisation des spires de décalage SD1, SD2 permet ainsi d'anticiper un problème de positionnement de l'extrémité du fil 21 formant la dernière spire de chaque bobine 19 par rapport au positionnement de la connexion sur la trace 26 correspondante.

Ainsi, une telle configuration est particulièrement bien adaptée lorsqu'un nombre entier de spires S ne permet pas de remplir toutes les couches C1-CM de la bobine 19 en allant d'une extrémité à l'autre du corps 41 de l'isolant de bobine 20.

Autrement dit, le nombre maximum de spires dans une couche valant N, et le nombre total de couches d'une bobine valant M, le nombre de spires Ns est inférieur à (N-1/2)xM. On précise que le nombre maximum de spires dans une couche N vaut L1/D; D étant le diamètre du fil et L1 étant la longueur radiale du corps 41 d'isolant de bobine 20.

En outre, comme cela ressort des figures 10 et 11, les encoches 15 du stator 11 sont dites à bords "non-parallèles", c'est-à-dire que les deux surfaces 65, 66 de deux dents 14 successives délimitant entre elle une encoche 15 sont inclinées l'une par rapport à l'autre vers l'axe X du stator 11. De préférence, le nombre de couches M de chaque bobine 19 est plus important du côté de la culasse 17 que du côté de l'axe X du stator 11 de manière à respecter une distance d'isolation électrique dans l'air DI.

Ainsi, pour une valeur Z égale à deux fois la tension phase-phase de la machine à laquelle on ajoute la valeur 1000, une distance d'isolation électrique DI est associée à cette valeur Z selon la norme 60034-1 tableau 16. Les spires S de deux bobines 19 adjacentes sont au moins séparées entre elles de cette distance d'isolation électrique DI.

En outre, dans un souci de standardisation, toutes les bobines 19 sont bobinées de manière identique les unes par rapport aux autres.

En variante, la deuxième spire de décalage SD2 correspond à une spire autre que la dernière spire. En variante, il est également possible de réaliser plus de deux spires de décalage SD1, SD2.

Comme montré sur les figures 6, 7a et 7b, l'isolant de bobine 20 comprend sur chacun de ses rebords 45, 46 une portion d'encliquetage 56 apte à s'encliqueter avec une portion d'encliquetage 57, 57' complémentaire appartenant au support de traces 25 (cf. figure 2a).

Plus précisément, comme cela est bien visible sur les figures 6 et 7a, le rebord avant 45 et le rebord arrière 46 d'un isolant de bobine 20 étant munis chacun de deux parties axiales longitudinales 48 reliées entre elles par des parties transversales 49, les portions d'encliquetage 56 sont réalisées dans une portion transversale 49 de chacun des rebords 45, 46.

Chaque portion d'encliquetage 56 est une partie femelle, notamment de forme arrondie. Chaque portion d'encliquetage 56 est apte à se déformer élastiquement pour coopérer avec la portion d'encliquetage 57, 57' correspondante du support de traces 25. Chaque portion d'encliquetage 56 comprend deux ergots de blocage 58 positionnés en regard l'un de l'autre pour retenir la portion mâle 57, 57' correspondante du support de traces 25. En l'occurrence, comme cela est bien visible sur la figure 3, le support de traces 25 comporte une pluralité de portions d'encliquetage 57, 57' de type mâle ménagées dans sa périphérie interne et sa périphérie externe. Ces portions d'encliquetage 57, 57' présentent en l'occurrence une forme de plot s'étendant radialement en saillie par rapport à la périphérie interne ou externe correspondante. Chaque plot 57, 57' comprend de préférence une fente 60 pour se déformer élastiquement pour pénétrer dans la portion d'encliquetage 56 femelle correspondante de l'isolant de bobine 20.

On distingue une pluralité de séries 61 de deux plots 57, 57' espacées angulairement de manière régulière. Chaque série 61 comporte un plot interne 57 ménagé dans la périphérie interne du support de traces 25 et un plot externe 57' ménagé dans la périphérie externe du support de traces 25. Le plot interne 57 et le plot externe 57' correspondant sont en l'occurrence coaxiaux l'un par rapport à l'autre. Les plots 57 et 57' pourront toutefois ne pas être coaxiaux et être décalés angulairement l'un par rapport à l'autre.

Le plot interne 57 de chaque série 61 est destiné à s'encliqueter avec une portion d'encliquetage 56 complémentaire femelle managée dans le rebord avant 45 d'un isolant de bobine 20 correspondant; tandis que le plot externe 57' de chaque série 61 est destiné à s'encliqueter avec une portion d'encliquetage 56 complémentaire femelle managée dans le rebord arrière 46 de l'isolant de bobine 20 correspondant.

Avantageusement, les plots externes 57' comportent une collerette 64 du côté de leur extrémité libre. Cela permet de limiter le débattement de l'interconnecteur 22 par rapport au stator 11 et donc de faciliter son centrage lors de l'opération d'encliquetage), en particulier dans le cas où des portions d'encliquetage 57' sont prévues uniquement dans la périphérie externe du support 25. Dans ce cas, l'interconnecteur 22 comporte au moins deux collerettes 64 ménagées dans deux plots 57' diamétralement opposés l'une par rapport à l'autre.

Comme on peut le voir clairement sur la figure 2a, le nombre de portions d'encliquetage 57, 57' de l'interconnecteur 22 est inférieur au nombre de portions d'encliquetage 56 de l'ensemble des isolants de bobine 20. En effet, dans un souci de standardisation des outillages d'obtention (moules) des composants, tous les rebords 45, 46 de tous les isolants de bobine 20 sont équipés de portions d'encliquetage 56 mais seuls certains d'entre eux vont coopérer avec des portions d'encliquetage 57, 57' correspondants appartenant au support de traces 25.

Dans tous les cas, afin d'assurer un maintien efficace de l'interconnecteur 22 sur le stator 11, l'interconnecteur 22 comporte au moins trois portions d'encliquetage 57 sur sa périphérie interne et au moins trois portions d'encliquetage 57' sur sa périphérie externe.

En variante, chaque isolant de bobine 20 comporte une portion d'encliquetage 56 ménagée dans un seul de ses rebords avant 45 ou arrière 46 et l'interconnecteur 22 comporte des portions d'encliquetage 57, 57' correspondantes réalisées dans une seule de ses périphéries interne ou externe.

En variante, les portions d'encliquetage 56 femelles sont portées par le support de traces 25 et les portions d'encliquetage mâles 57, 57' sont portées par les rebords avant 45 et/ou arrière 46 des isolants de bobine 20. En variante, comme cela est représenté sur la figure 12, les portions d'encliquetage 56 sont constituées par des pattes 67 tournées l'une vers l'autre définissant un espace 68 destiné à recevoir un tronçon de section réduite d'une jambe 69 correspondant à une portion d'encliquetage 57 ou 57'. Les bords des pattes 67 pourront être évasés pour faciliter l'insertion des tronçons de jambe 69 à l'intérieur de l'espace 68.

Comme on peut le voir sur les figures 7a et 7b, les isolants de bobine 20 pourront également comporter des guides fils 70 ménagés dans les rebords avant 45 et arrière 46. En l'occurrence, les guides fils 70 sont constitués par des rainures d'orientation axiale de forme complémentaire des fils 21 pour guider les extrémités des fils 21 en entrée et en sortie de bobine sur la portion s'étendant entre le corps de bobine et le pliage. Comme cela est bien visible sur la figure 8c, chaque guide fil 70 comporte un rétrécissement de section 71 pour assure un maintien de l'extrémité des fils de bobine dans la rainure correspondante.

Les figures 13 à 16 montrent l'interconnecteur 22 qui ne fait pas part de l'invention de la figure 5 comportant des traces 26 annulaires positionnées axialement les unes à côté des autres. Chacune des entrées 211 et des sorties 212 est reliée à une trace 26 de l'interconnecteur 22 par le biais d'une patte de connexion 35. Dans ce cas, les traces 26 ont des diamètres internes et externes sensiblement identiques. Ces traces 26 sont empilées axialement les unes sur les autres et isolées électriquement entre elles.

Chaque trace 26 porte sur sa périphérie interne des pattes 35 pour le soudage des extrémités des bobines 19 du stator 11. Les pattes 35 s'étendent en saillie vers l'intérieur de l'interconnecteur 22. Les pattes de connexions 35 sont situées sensiblement suivant une même circonférence. De préférence, les traces 26 sont noyées dans le support 25 réalisé en matériau électriquement isolant, tel que de la matière plastique. Il existe une couche de matériau isolant entre deux traces 26 successives.

Comme on peut le voir sur la figure 15, les extrémités des fils de bobine 211, 212 sont toutes inclinées circonférentiellement suivant un même sens horaire, et les extrémités des fils de bobine 211, 212 inclinées sont en contact avec la face droite de la patte de connexion 35 correspondante. Dans une variante non revendiquée et non représentée, les extrémités des fils de bobine 211, 212 sont toutes inclinées circonférentiellement suivant un même sens antihoraire, et les extrémités des fils de bobine 211, 212 inclinées sont en contact avec la face gauche de la patte de connexion 35 correspondante.

Les termes relatifs de type "horaire", "anti-horaire", "face droite", "face gauche", sont indiqués par rapport à un même point de référence PR situé à l'intérieur de l'interconnecteur 22 (par exemple au centre) depuis lequel sont regardés l'interconnecteur 22 et ses pattes 35 correspondantes.

Autrement dit, toutes les extrémités des fils de bobine 211, 212 sont inclinées dans un même sens et sont en contact avec les faces des pattes de connexion 35 tournées dans une même direction.

On garantit ainsi un contact entre les extrémités des fils de bobine 211, 212 et les pattes de connexion 35 correspondantes, ce qui facilite la réalisation des opérations de soudure. En outre, les extrémités des fils 211, 212 sont moins contraintes mécaniquement, ce qui augmente la durée de vie des liaisons électriques.

Selon une variante non revendiquée et non représentée les extrémités des fils de bobine 211, sont toutes inclinées circonférentiellement suivant un même sens horaire, et les extrémités des fils de bobine 211 inclinées sont en contact avec la face droite de la patte de connexion 35 correspondante et les extrémités des fils de bobines 212 sont toutes inclinées circonférentiellement suivant un même sens antihoraire, et les extrémités des fils de bobine 212 inclinées sont en contact avec la face gauche de la patte de connexion 35 correspondante. Dans cette variante, lors de l'insertion de l'interconnecteur, on tourne l'interconnecteur dans un premier sens horaire inclinant ainsi les extrémités des fils de bobine 211 qui sont plus longue que les extrémités des fils de bobine 212 puis on descend l'interconnecteur de manière à ce que les fils de bobines 212 soient en vis-à-vis de la face gauche de leur patte de connexion 35 correspondante puis on retourne dans le sens antihoraire (par exemple moitié moins que ce qui a été fait dans le sens horaire) de manière à avoir toutes les extrémités des fils de bobine 212 inclinées en contact avec la face gauche de leur patte de connexion 35 correspondante.

Bien entendu selon un autre exemple c'est les sortie 212 qui sont plus longue que les entrées 211 et dans ce cas l'opération commence en tournant dans un premier temps dans le sens anti horaire puis ensuite de descendre et de tourner dans le sens horaire.

Autrement dit, toutes les extrémités des fils de bobine 211, sont inclinées dans un même sens et sont en contact chacune avec une faces des pattes de connexion 35 tournées dans une même direction et toutes les extrémités des fils de bobine 212, sont inclinées dans un l'autre sens et sont chacune en contact avec l'autre face des pattes de connexion 35 correspondante tournées dans une même direction.

Bien entendu, cela peut être les extrémités de sortie 212 qui sont contre la face de droite des pattes de connexions et inclinées dans le sens horaire et les extrémités d'entrée 211 qui sont contre la face de gauche des pattes de connexions et inclinées dans le sens anti-horaire

On garantit ainsi un contact entre les extrémités des fils de bobine 211, 212 et les pattes de connexion 35 correspondantes, ce qui facilite la réalisation des opérations de soudure. En outre, les extrémités des fils 211, 212 sont moins contraintes mécaniquement, ce qui augmente la durée de vie des liaisons électriques.

Selon un autre exemple non revendiqué et non représenté, le connecteur est raccordé en ayant, certaines extrémités des fils de sortie de bobine 211, et certaines extrémités des fils de sortie de bobine 212 sont raccordée à leur patte de connexion selon la première variante représenté sur la figure 15 et d'autre extrémités des fils d'entrées et de sorties sont raccordée à leurs pattes de connexion 35 correspondantes selon l'une ou les autres variantes.

Comme cela est bien visible sur les figures 14a à 14c, l'interconnecteur 22 comprend des portions d'encliquetage 73 pour fixer ledit interconnecteur 22 sur des portions d'encliquetage 74 correspondantes solidaires du corps de stator 12. A cet effet, chaque portion d'encliquetage 74 est ménagée dans un isolant de bobine 20 pour verrouiller angulairement, suivant ledit axe X, l'interconnecteur 22 par rapport au corps de stator 12. Les portions d'encliquetage 73 de l'interconnecteur 22 sont en l'occurrence de type mâle, tandis que les portions d'encliquetage 74 des isolants de bobine 20 sont de type femelle. En variante, il serait toutefois possible d'inverser la configuration en prévoyant des portions d'encliquetage 73 de type femelle et des portions d'encliquetage 74 de type mâle.

En outre, l'isolant de bobine 20 comprend une portion de guidage 75 circonférentiel, suivant ledit axe X, de la portion d'encliquetage 73 de l'interconnecteur 22 vers la portion d'encliquetage 74.

Dans le mode non revendiqué des figures 13 et 14a, chaque portion de guidage 75 présente une rampe 76 réalisée dans une protubérance 77 par ajout de matière dans la partie transversale 49 de la face externe du rebord arrière 46 d'un isolant de bobine 20. La figure 14a représente est une vue illustrant un zoom partiel de la figure 13, montrant le système d'encliquetage de l'interconnecteur. Sur la figure 14a les pieds d'appuie 36 de l'interconnecteur ne sont pas visibles, ces pieds sont visibles sur la figure 13. Cette protubérance 77 est issue d'une face externe d'une partie transversale 49 du rebord arrière 46 de l'isolant de bobine 20. Par face externe, on entend une face du rebord avant 45 ou arrière 46 qui est tournée du côté opposé à la gorge 47. La portion d'encliquetage 74 forme un verrouillage de l'interconnecteur. La portion d'encliquetage se situe dans un prolongement de la rampe 76. En variante, selon un exemple non revendiqué et non la rampe 76 est réalisée par ajout de matière sur la face interne du rebord arrière 46 et la portion d'encliquetage se situe au dessus axialement des bobines (cela permet de diminuer l'encombrement radial). Dans ce mode de réalisation, le fait que la rampe soit réalisée sur la face externe du rebord arrière 46, permet de faciliter le bobinage de la bobine contrairement au mode de réalisation non représenté ayant la rampe sur la face interne. Dans ce mode de réalisation représenté, la portion d'encliquetage 73 de l'interconnecteur 22 est constitué par un plot ayant une partie axiale 81 et une partie radiale 82 d'orientation sensiblement radiale.

En outre, l'interconnecteur 22 comporte des pieds d'appui 36 posés sur un rebord de la culasse du stator 11.

L'extrémité de la partie radiale est destinée à coopérer avec la rampe 76 pour ensuite se loger dans une portion d'encliquetage 74 correspondante en forme de cuvette. Cette partie radiale 81 a une forme de téton radial. Comme visible sur la figure 13, la rampe 76 pourra être munie de crans 85 pour améliorer la retenue du plot 73.

En variante non revendiquée et non la protubérance 77 et la rampe 76 sont réalisés dans la face interne du rebord arrière 46. La portion d'encliquetage 74 en forme de cuvette se situe dans un prolongement de la rampe 76.

Dans le mode non revendiqué de la figure 14b, la portion de guidage 75 comprend une protubérance qui comporte deux parois 78 en vis-à-vis l'une de l'autre définissant un passage 79 suivant une direction circonférentielle pour la portion d'encliquetage de l'interconnecteur 22. En d'autre terme, il y a des parois 78 dites parois d'appui et des parois de retenue, les parois d'appuis étant plus éloignées de l'interconnecteur que les parois de retenue. Les parois 78 définissent de préférence un passage 79 de forme évasé en direction de l'entrée de la portion d'encliquetage 73. Cela permet de faciliter l'insertion de la portion d'encliquetage 73 de l'interconnecteur 22 à l'intérieur du passage 79 de la portion de guidage 75. Les faces des rampes 76 et des parois 78 s'étendent suivant un plan transversal par rapport à l'axe X du corps de stator 12. En outre cette double rampe permet de supprimer les pattes d'appuis 36 visible sur la figure 13. En effet les parois d'appuie des parois 78 remplisse la fonction des pattes d'appuie 36. L'interconnecteur 22 est ainsi maintenu uniquement par le biais des bobines (sans pattes posé sur le stator). Cela a pour avantage d'avoir moins de différences de vibration sur l'interconnecteur par rapport au bobines et donc moins de risque de dessoudage ou de rupture des extrémités de sortie ou d'entrée des bobines sur l'interconnecteur. En outre, on dégage ainsi la périphérie externe de l'interconnecteur 22 pour faciliter l'étape d'imprégnation du bobinage réalisée par trempage et roulage dans un bain de vernis.

Ainsi, comme cela est visible sur la figure 15, lors de l'installation de l'interconnecteur 22, chaque retour 82 des portions d'encliquetage 73 de l'interconnecteur 22 est mis en coopération avec une rampe 76 ou les parois 78 d'un passage 79 de manière à assurer un guidage circonférentiel de l'interconnecteur 22 suivant un sens de rotation, en l'occurrence un sens antihoraire SH. Le guidage en rotation est prévu jusqu'à ce que les faces des pattes de connexion 35 tournées d'un même côté viennent en contact avec les extrémités des fils 211, 212 correspondantes. Puis, les retours 82 viennent coopérer avec les portions d'encliquetage 74 correspondantes pour verrouiller l'interconnecteur 22 dans la position angulaire préférentielle. Les extrémités des fils de bobine 211, 212 peuvent ensuite être soudées aisément aux pattes de connexion 35 du fait de leur mise en contact préalable avec ces pattes 35.

Selon un autre exemple des modes non revendiqué représentée sur la figure 13 et 14a, et comme cela est illustré schématiquement par la figure 16, l'interconnecteur 22 pourra être dépourvu de pied d'appui 36 en ayant ses parties axiales 81 qui s'étendent jusqu'au paquet de tôle de manière à reposer directement sur le paquet de tôle. On dégage ainsi la périphérie externe de l'interconnecteur 22 pour faciliter l'étape d'imprégnation du bobinage réalisée par trempage et roulage dans un bain de vernis.

Tous les modes non revendiqués des figures 14a, 14b pourront bien entendu être aisément transposables à un interconnecteur 22 présentant la configuration des figures 2a, 2b, et 3.

Le rotor de la machine référencé 91 sur la figure 11 pourra être un rotor muni d'aimants permanents 92 implantés en V ou en U ou en I ou en surfacique dans des logements ménagés dans le paquet de tôles. En variante, le rotor pourra être un rotor à griffes comme dans le document FR2890798. En variante, le rotor pourra être à pôles saillants. En variante, le rotor à griffes ou à pôles saillants pourra comporter également des aimants permanents.

Le stator 11 pourra présenter en variante un bobinage quadriphasé, pentaphasé, voire même hexaphasé.

La figure 16 représente un autre mode non revendiqué dans lequel les pieds de l'interconnecteur ont été remplacés par des points d'appui en vis-à-vis de chaque système d'encliquetage. Dans ce mode non revendiqué représenté sur la figure 16, la portion d'encliquetage 73 de l'interconnecteur 22 est constitué par un plot ayant une partie axiale 81 et une partie radiale 82 d'orientation sensiblement radiale. La partie axiale 81 vient en appuie sur un rebord de la culasse du stator à la place des pieds d'appui 36 des modes de réalisation précédentes. Dans le mode non revendiqué représenté en figure 16, la portion de guidage est identique au mode non revendiqué de la figure 14a mais pourrait aussi être identique au mode non revendiqué de la figure 14b ou selon un autre exemple.

Ainsi dans ce mode non revendiqué, la partie radiale n'est pas située à l'extrémité de la partie axiale la plus proche du stator comme dans les modes non revendiqués des figures 14a et 14b mais entre les deux extrémités de la partie axiale.

La machine électrique tournante pourra appartenir à un véhicule automobile et être de manière précitée un alternateur, un alterno-démarreur qui est un alternateur réversible, un moteur électrique ou un ralentisseur électromagnétique.

## Revendications

1. Stator (11) de machine électrique tournante notamment pour véhicule automobile, ledit stator (11) comportant:
- un corps de stator (12) comportant un axe (X) et une pluralité de dents (14) réparties angulairement autour dudit axe (X), ledit corps de stator (12) formant une périphérie externe et une périphérie interne autour dudit axe (X),
- des bobines (19) montées chacune autour d'une dent (14) par l'intermédiaire d'un isolant de bobine (20), chacune des bobines (19) étant formée par au moins un fil (21) enroulé autour de
ladite dent (14) correspondante,
- chaque fil de bobine (21) comprenant une entrée (211) et une sortie (212) correspondant chacune à une extrémité dudit fil (21),
- un interconnecteur (22) comprenant un ensemble de traces (26), lesdites traces (26) étant annulaires et étant connectées électriquement aux entrées (211) et
sorties (212) des bobines (19), et un support de traces (25), ledit support de traces (25) comportant des parois isolantes positionnées chacune entre deux traces (26) successives, ledit interconnecteur (22) étant monté entre la périphérie interne et la périphérie externe dudit corps de stator (12),
chaque bobine (19) ayant une extrémité (211, 212) positionnée du côté de ladite périphérie interne et l'autre extrémité (211, 212) positionnée du côté de ladite périphérie externe dudit stator (11), **caractérisé en ce que** l'ensemble des traces (26) est positionné radialement les unes à côté des autres et entre les entrées (211) et les sorties (212) desdites bobines (19),
**en ce que** l'isolant de bobine (20) comprend sur chacun de ses rebords (45, 46) une portion d'encliquetage (56) apte à s'encliqueter avec une portion d'encliquetage (57, 57') complémentaire appartenant au support de traces (25),
et **en ce que** les fils (21) de bobine sont pliés de telle façon que les entrées (211) et les sorties (212) s'étendent radialement et au-dessus des traces (26) dudit interconnecteur (22).

2. Stator selon la revendication 1, **caractérisé en ce que** l'ensemble desdites bobines (19) comprend une même longueur de fil de sortie.

3. Stator selon la revendication 1 ou 2, **caractérisé en ce que**
l'ensemble desdites bobines (19) comprend une même longueur de fil d'entrée.

4. Stator selon l'une quelconque des revendications 1 à 3, **caractérisé en ce que** chacune des traces (26) comprend des bossages (31) s'étendant axialement en saillie et des portions de connexion (32) entre ces bossages (31) et **en ce que** chacune des entrées (211) et des sorties (212) est soudée sur un des bossages (31) correspondant.

5. Stator selon la revendication précédente, **caractérisé en ce que** lesdites parois isolantes (28) ont une hauteur (H1) comprise entre une hauteur (H2) des portions de connexion (32) et une hauteur (H3) des bossages (31).

6. Stator selon l'une quelconque des revendications 1 à 5, **caractérisé en ce que** les entrées (211) et les sorties (212) sont pliées suivant deux sens opposés de manière à se rapprocher l'une par rapport à l'autre.

7. Stator selon l'une quelconque des revendications 1 à 6, **caractérisé en ce que** toutes les bobines ont la même longueur de fil et **en ce que** :
- 1/N bobines ont la même longueur d'entrée et la même longueur de sortie, et **en ce que** les longueurs d'entrées sont plus petite que les longueurs de sortie
-- 1/N bobines ont la même longueur d'entrée et la même longueur de sortie, et **en ce que** les longueurs de sortie sont plus petite que les longueurs d'entrée
-- 1/N bobines ont la même longueur d'entrée et la même longueur de sortie, et **en ce que** les longueurs d'entrées sont égales aux longueurs de sortie
N étant égal à trois.

8. Stator selon la revendication précédente, dans lequel chaque bobine de la même phase comprend des bobines ayant toute la même longueur de sortie et ayant toute la même longueur d'entrée.

9. Stator selon l'une quelconque des revendications 1 à 6 combinée à la revendication 4, **caractérisé en ce qu'**une longueur des entrées (211) ou des sorties (212) s'étend jusqu'au bossage (31) de la trace (26) ou une des deux traces (26) au centre dudit interconnecteur (22).

10. Stator selon la revendication précédente, **caractérisé en ce que** chaque bobine (19) comprend une entrée (211) et une sortie (212) de même longueur.

11. Machine électrique tournante de véhicule automobile **caractérisée en ce qu'**elle comporte un stator (11) tel que défini selon l'une quelconque des revendications précédentes.

## Patentansprüche

1. Stator (11) einer rotierenden elektrischen Maschine, insbesondere für ein Kraftfahrzeug, wobei der Stator (11) umfasst:
- einen Statorkörper (12), der eine Achse (X) und eine Mehrzahl von winklig um die Achse (X) herum verteilten Zähnen (14) umfasst, wobei der Statorkörper (12) einen äußeren Umfang und einen inneren Umfang um die Achse (X) herum bildet,
- Spulen (19), die jeweils mittels einer Spulenisolierung (20) um einen Zahn (14) herum montiert sind, wobei jede der Spulen (19) durch mindestens einen Draht (21) gebildet wird, der um den entsprechenden Zahn (14) herum gewickelt ist,
- wobei jeder Spulendraht (21) einen Eingang (211) und einen Ausgang (212) aufweist, die jeweils einem Ende des Drahts (21) entsprechen,
- einen Verbinder (22), der eine Gruppe von Bahnen (26) aufweist, wobei die Bahnen (26) ringförmig sind und elektrisch mit den Eingängen (211) und Ausgängen (212) der Spulen (19) verbunden sind, und einen Bahnenträger (25), wobei der Bahnenträger (25) isolierende Wände umfasst, die jeweils zwischen zwei aufeinander folgenden Bahnen (26) angeordnet sind, wobei der Verbinder (22) zwischen dem inneren Umfang und dem äußeren Umfang des Statorkörpers (12) montiert ist,
wobei jede Spule (19) ein Ende (211, 212) hat, das auf der Seite des inneren Umfangs angeordnet ist, und das andere Ende (211, 212) auf der Seite des äußeren Umfangs des Stators (11) angeordnet ist,
**dadurch gekennzeichnet, dass** die Gruppe der Bahnen (26) radial nebeneinander und zwischen den Eingängen (211) und den Ausgängen (212) der Spulen (19) angeordnet ist, dass die Spulenisolierung (20) an jedem ihrer Flansche (45, 46) einen Einrastabschnitt (56) aufweist, der geeignet ist, sich mit einem komplementären Einrastabschnitt (57, 57'), der zu dem Bahnenträger (25) gehört, zu verrasten,
und dass die Spulendrähte (21) so gebogen sind, dass sich die Eingänge (211) und die Ausgänge (212) radial und oberhalb der Bahnen (26) des Verbinders (22) erstrecken.

2. Stator nach Anspruch 1, **dadurch gekennzeichnet, dass** die Gruppe der Spulen (19) eine selbe Ausgangsdrahtlänge aufweist.

3. Stator nach Anspruch 1 oder 2, **dadurch gekennzeichnet, dass** die Gruppe der Spulen (19) eine selbe Eingangsdrahtlänge aufweist.

4. Stator nach einem der Ansprüche 1 bis 3, **dadurch gekennzeichnet, dass** jede der Bahnen (26) Erhebungen (31), die sich axial abstehend erstrecken, und Verbindungsabschnitte (32) zwischen diesen Erhebungen (31) aufweist und dass jeder der Eingänge (211) und der Ausgänge (212) an eine entsprechende der Erhebungen (31) geschweißt ist.

5. Stator nach dem vorhergehenden Anspruch, **dadurch gekennzeichnet, dass** die isolierenden Wände (28) eine Höhe (H1) haben, die zwischen einer Höhe (H2) der Verbindungsabschnitte (32) und einer Höhe (H3) der Erhebungen (31) liegt.

6. Stator nach einem der Ansprüche 1 bis 5, **dadurch gekennzeichnet, dass** die Eingänge (211) und die Ausgänge (212) in zwei entgegengesetzte Richtungen gebogen sind, so dass sie sich einander nähern.

7. Stator nach einem der Ansprüche 1 bis 6, **dadurch gekennzeichnet, dass** alle Spulen dieselbe Drahtlänge haben und dass:
- 1/N Spulen dieselbe Eingangslänge und dieselbe Ausgangslänge haben und dass die Eingangslängen kleiner als die Ausgangslängen sind
- 1/N Spulen dieselbe Eingangslänge und dieselbe Ausgangslänge haben und dass die Ausgangslängen kleiner als die Eingangslängen sind
- 1/N Spulen dieselbe Eingangslänge und dieselbe Ausgangslänge haben und dass die Eingangslängen gleich den Ausgangslängen sind
wobei N gleich drei ist.

8. Stator nach dem vorhergehenden Anspruch, bei dem jede Spule derselben Phase Spulen aufweist, die alle dieselbe Ausgangslänge haben und die alle dieselbe Eingangslänge haben.

9. Stator nach einem der Ansprüche 1 bis 6 in Verbindung mit Anspruch 4, **dadurch gekennzeichnet, dass** sich eine Länge der Eingänge (211) oder der Ausgänge (212) bis zu der Erhebung (31) der Bahn (26) oder einer der beiden Bahnen (26) im Zentrum des Verbinders (22) erstreckt.

10. Stator nach dem vorhergehenden Anspruch, **dadurch gekennzeichnet, dass** jede Spule (19) einen Eingang (211) und einen Ausgang (212) mit derselben Länge aufweist.

11. Rotierende elektrische Maschine eines Kraftfahrzeugs, **dadurch gekennzeichnet, dass** sie einen Stator (11) wie in einem der vorhergehenden Ansprüche definiert umfasst.

## Claims

1. Stator (11) of a rotating electrical machine in particular for a motor vehicle, said stator (11) comprising:
- a stator body (12) comprising an axis (X) and a plurality of teeth (14) distributed angularly around said axis (X), said stator body (12) forming an external periphery and an internal periphery around said axis (X),
- coils (19) each mounted around a tooth (14) by way of a coil insulator (20), each of the coils (19) being formed by at least one wire (21) wound around said corresponding tooth (14),
- each coil wire (21) comprising an input (211) and an output (212) each corresponding to one end of said wire (21),
- an interconnector (22) comprising a set of tracks (26), said tracks (26) being annular and being electrically connected to the inputs (211) and outputs (212) of the coils (19), and a track holder (25), said track holder (25) comprising insulating walls each positioned between two successive tracks (26), said interconnector (22) being mounted between the internal periphery and the external periphery of said stator body (12),
each coil (19) having one end (211, 212) positioned near said internal periphery and the other end (211, 212) positioned near said external periphery of said stator (11),
**characterized in that** all of the tracks (26) are positioned radially near one another and between the inputs (211) and the outputs (212) of said coils (19), **in that** the coil insulator (20) comprises on each of its edges (45, 46) a snap-fitting portion (56) able to be snap-fitted together with a complementary snap-fitting portion (57, 57') belonging to the track holder (25), and **in that** the coil wires (21) are bent in such a way that the inputs (211) and the outputs (212) extend radially and above the tracks (26) of said interconnector (22) .

2. Stator according to Claim 1, **characterized in that** all of said coils (19) comprise the same output wire length.

3. Stator according to Claim 1 or 2, **characterized in that** all of said coils (19) comprise the same input wire length.

4. Stator according to any one of Claims 1 to 3, **characterized in that** each of the tracks (26) comprises bosses (31) protruding axially and connection portions (32) between these bosses (31) and **in that** each of the inputs (211) and outputs (212) is welded on one of the corresponding bosses (31).

5. Stator according to the preceding claim, **characterized in that** said insulating walls (28) have a height (H1) comprised between a height (H2) of the connection portions (32) and a height (H3) of the bosses (31) .

6. Stator according to any one of Claims 1 to 5, **characterized in that** the inputs (211) and the outputs (212) are bent in two opposite directions so as to move closer to one another.

7. Stator according to any one of Claims 1 to 6, **characterized in that** all of the coils have the same wire length and **in that**:
- 1/N coils have the same input length and the same output length, and **in that** the input lengths are shorter than the output lengths
-- 1/N coils have the same input length and the same output length, and **in that** the output lengths are shorter than the input lengths
-- 1/N coils have the same input length and the same output length, and **in that** the input lengths are equal to the output lengths
N being equal to three.

8. Stator according to the preceding claim, wherein each coil of the same phase comprises coils all having the same output length and all having the same input length.

9. Stator according to any one of Claims 1 to 6, combined with Claim 4, **characterized in that** a length of the inputs (211) or of the outputs (212) extends as far as the boss (31) of the track (26) or one of the two tracks (26) in the centre of said interconnector (22).

10. Stator according to the preceding claim, **characterized in that** each coil (19) comprises an input (211) and an output (212) of the same length.

11. Rotating electrical machine of a motor vehicle, **characterized in that** it comprises a stator (11) as defined in any one of the preceding claims.
